# EUROPEAN PATENT APPLICATION

(11) **EP 4 435 339 A1**
(43) Date of publication of application: **25.09.2024**
(21) Application number: 24151920.6
(22) Date of filing: 15.01.2024
(51) Int. Cl.: F24F 11/52, H04L 12/28

(54) **CUSTOMIZABLE ROUTINES FOR BUILDING CONTROL SYSTEM**

(30) Priority: 24.03.2023 US 202363492190 P
(71) Applicant: Ademco, Inc., Golden Valley, MN 55422 (US)
(72) Inventor: CHAVEZ, Ruben, Minnesota, 55422 (US); RODRIGUEZ, Cesar, 31136 Chibuahua (MX); RIVERO, Andrea, Minnesota, 55422 (US); DOMINGUEZ, Eduardo, Minnesota, 55422 (US); SCHULTZ, David, Minnesota, 55422 (US); BAUMAN, Mike J, Minnesota, 55422 (US); KLEIN, Aaron, Minnesota, 55422 (US)
(74) Representative: Murgitroyd & Company

(57) **Abstract**

A control system for a building includes a controller configured to control a heating, ventilation, and air conditioning (HVAC) system configured to condition a space within the building. An electronic device is configured to be in electronic communication with the controller and provides a first output to the controller that corresponds to a first state of the electronic device. The electronic device provides a second output to the controller that corresponds to a second state of the electronic device. In response to receiving one of the first output or the second output, the controller is configured to change a state of the HVAC system from a first state to a second state. In response to receiving the other of the first output or the second output, the controller is configured to change the state of the HVAC system from the second state to a third state.

## Description

### FIELD

This disclosure relates generally to programmable controllers for buildings. More particularly, this disclosure relates to customizable output actions for the programmable controllers.

### BACKGROUND

Controllers are used on a wide variety of devices and systems for controlling various functions in buildings. Some controllers have limited capabilities for customizing the operations to a particular user. Some controllers for controlling various functions in buildings include, for example, HVAC controllers, water heater controllers, water softener controllers, security system controllers, lawn sprinkler controllers, and lighting system controllers.

### SUMMARY

In some embodiments, a control system for a building includes a controller configured to control a heating, ventilation, and air conditioning (HVAC) system configured to condition a space within the building. In some embodiments, an electronic device is configured to be in electronic communication with the controller. In some embodiments, the electronic device provides a first output to the controller. In some embodiments, the first output corresponds to a first state of the electronic device. In some embodiments, the electronic device provides a second output to the controller. In some embodiments, the second output corresponds to a second state of the electronic device. In some embodiments, in response to receiving one of the first output or the second output, the controller is configured to change a state of the HVAC system from a first state to a second state. In some embodiments, the first state of the HVAC system is different than the second state of the HVAC system. In some embodiments, in response to receiving the other of the first output or the second output, the controller is configured to change the state of the HVAC system from the second state to a third state. In some embodiments, the third state of the HVAC system is different than the second state of the HVAC system.

In some embodiments, a method includes receiving, at a controller of a building, a selection to configure one or more custom alerts. In some embodiments, the method includes receiving, at the controller of the building, a selection indicating which terminal is connected to an electronic device. In some embodiments, the method includes receiving, at the controller of the building, a selection of a custom action to perform in response to a change in state of the terminal. In some embodiments, the method includes storing the custom action and configuration in a memory of the controller of the building.

In some embodiments, a method includes monitoring, by a building controller, one or more terminals for a change in state. In some embodiments, in response to the change in state, the method includes changing a state of one or more building systems. In some embodiments, the one or more terminals are terminals on an equipment interface module that is in electronic communication with the building controller.

### BRIEF DESCRIPTION OF THE DRAWINGS

References are made to the accompanying drawings that form a part of this disclosure and that illustrate embodiments in which the systems and methods described in this Specification can be practiced.
FIG. 1 is a schematic view of a building 1 including a heating, ventilation, and air conditioning (HVAC) system, according to some embodiments.
FIG. 2 is a schematic view of a building controller, according to some embodiments.
FIG. 3 shows a flowchart of a method, according to some embodiments.
FIG. 4 to FIG. 21 show user interfaces that may be displayed on a building controller, according to some embodiments.

Like reference numbers represent the same or similar parts throughout.

### DETAILED DESCRIPTION

This disclosure relates generally to programmable controllers for buildings. More particularly, this disclosure relates to customizable output actions for the programmable controllers.

Building controllers such as, but not limited to, controllers for a heating, ventilation, and air conditioning (HVAC) system have limited configurations offered to a user. When installing the building controller, installers may not be able to configure the controller to meet their exact needs. In some instances, the installers or end users may incorporate additional devices with the building controller to meet their needs. However, customization may still be limited and may be dependent upon numerous devices and applications from different providers.

Embodiments of this disclosure are directed to building controllers such as HVAC controllers in which an installer or user can create custom actions to meet desired goals. For example, in some embodiments, an installer or user can program the building controller to lockout heating or cooling if a door or window sensor indicates that the door or window is open. In some embodiments, an installer or user can program the building controller to activate a ventilator if a carbon monoxide detector senses a level of carbon monoxide is over a threshold. In some embodiments, an installer or user can program the building controller to close a window shade (or shades) if a sensed temperature in one or more rooms exceeds a setpoint. In some embodiments, an installer or user can program the building controller to turn on a light if a geofence detects that a corresponding device is approaching the building. In some embodiments, an installer or user can program the building controller to turn off a light if a geofence detects that a corresponding device is leaving the building. It is to be appreciated that these are examples and that additional customizations are possible in accordance with the remainder of this disclosure.

In some embodiments, the building controller is an HVAC controller configured to control an HVAC system in a building. In some embodiments, the HVAC controller may be connected in electrical communication with an equipment interface module (EIM). In some embodiments, one or more electronic devices such as, but not limited to, one or more sensors or the like can be connected in electrical communication with one or more terminals of the EIM. The EIM can receive corresponding changes in state from the one or more electronic devices, which can be provided to the HVAC controller as an input condition. The custom action can be programmed into the HVAC controller and configured to change the output of the HVAC system in response to the received input condition.

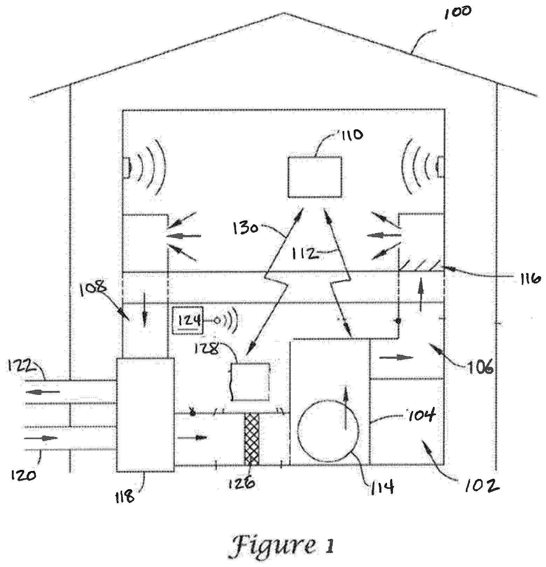

FIG. 1 is a schematic view of a building 100 including a heating, ventilation, and air conditioning (HVAC) system 102, according to some embodiments. The HVAC system 102 can be configured to control one or more environmental conditions within one or more spaces (e.g., conditioned spaces) of the building 100.

In the illustrated embodiment, the HVAC system is representative of a forced air type HVAC system. It is to be appreciated that other types of HVAC systems are within the scope of the present disclosure. Examples of other types of HVAC system include, but are not limited to, boiler systems, radiant heating systems, electric heating systems, cooling systems, heat pump systems, combinations thereof, or any other suitable type of HVAC system.

The HVAC system 102 includes one or more HVAC components 104, a system of ductwork and air vents including a supply air duct 106 and a return air duct 108, and at least one controller 110. In some embodiments, the controller 110 can be referred to as the building controller, the HVAC controller, or the like. In some embodiments, the controller 110 can be a thermostat, a plurality of thermostats, or the like. The one or more HVAC components 104 can include, but are not limited to, a furnace, a heat pump, an electric heat pump, a geothermal heat pump, an electric heating unit, an air conditioning unit, a ventilation unit, a humidifier, a dehumidifier, an air exchanger, an air cleaner, a damper, a valve, combinations thereof, or the like.

In some embodiments, the controller 110 may be configured to control the comfort level and, in some embodiments, the air quality conditions in the building by activating and deactivating the one or more HVAC components 104 in a controlled manner. In some embodiments, the controller 110 can be configured to control one or more other systems in the building besides the HVAC system. For example, the controller 110 can control one or more components related to security, control of appliances, control of systems such as water systems, combinations thereof, or the like. The controller 110 can be configured to control the one or more HVAC components 104 via a wired or wireless communication link 112. The controller 110 may wirelessly communicate with the one or more HVAC components 104 or other systems using a wireless protocol such as, but not limited to, cellular communication, ZigBee, Bluetooth, Wi-Fi, IrDA, dedicated short range communication (DSRC), EnOcean, combinations thereof, or any other suitable wireless protocols.

In some embodiments, the controller 110 is a thermostat. In some embodiments, the thermostat can include (e.g., within a housing of the thermostat) or have access to a temperature sensor for sensing an ambient temperature at or near the thermostat. In some embodiments, the controller 110 can be a zone controller, or can include multiple zone controllers each monitoring, controlling, or combinations thereof, the comfort level within a particular zone in the building.

In the illustrated embodiment, the one or more HVAC components 104 may provide heated air, cooled air, or a combination thereof, via the ductwork throughout the building 100. In some embodiments, the one or more HVAC components 104 can be in fluid communication with the conditioned space (e.g., each room, zone, or combination thereof) in the building 100 via the ductwork.

In some embodiments, when a heat call signal is provided by the controller 110, the one or more HVAC components 104 (e.g., forced warm air furnace) can be activated to supply heated air to the conditioned space within the building 100 via supply air duct 106. The heated air may be forced through supply air duct 106 by a blower or fan 114. In this example, the cooler air from the conditioned space can be returned to the one or more HVAC components 104 for heating via return air duct 108. Similarly, when a cool call signal is provided by the controller 110, the one or more HVAC components 104 (e.g., air conditioning unit) can be activated to supply cooled air to the conditioned space within the building via the supply air duct 106. In some embodiments, the cooled air may be forced through supply air duct 106 by the blower or fan 114. In this example, the warmer air from each zone may be returned to the one or more HVAC components 104 for cooling via the return air duct 108.

In some embodiments, the system of vents or ductwork can include one or more dampers 116 to regulate the flow of air. For example, one or more dampers 116 may be coupled to the controller 110 and the controller 110 can coordinate the one or more dampers 116 with the operation of the one or more HVAC components 104. The controller 110 can actuate the one or more dampers 116 to an open position, a closed position, or a partially open position to modulate the flow of air from the one or more HVAC components 104 to an appropriate space within the building. The one or more dampers 116 may be included in zoned HVAC systems and may be used to control which zone or zones receives conditioned air from the one or more HVAC components 104.

Additionally, in some embodiments, the one or more HVAC components 104 may exhaust stale air, supply fresh air, or combinations thereof, to the building 100 via the ductwork located throughout the building 100. For example, in some embodiments, the one or more HVAC components 104 can include a ventilation unit 118, which can draw outside air into the building via an outside air intake 120 and expel inside air via an inside air outlet 122. In some embodiments, a heat exchanger (not shown) can be provided to exchange heat between the outgoing inside air and the incoming outside air. In some embodiments, the ventilation unit 118 can include additional fans, blowers, or combinations thereof to facilitate the exchange of stale air from within the building 100 with fresh air supplied from outside the building 100.

In some embodiments, the ventilation unit 118 can include a ventilation controller (not shown), that can receive ventilation commands from, for example, the controller 110, and in response, can activate or deactivate the various components of the ventilation unit 118 to implement the received ventilation commands. In some embodiments, the ventilation unit 21 may be coupled to additional ductwork which may draw stale air from different locations within the building 100 to be exhausted from the building via the inside air outlet 122. It is to be appreciated that these are just examples.

In some embodiments, the ventilation unit 118 can be controlled according to a schedule or setpoint stored in the controller 110. In some embodiments, the controller 110 can be configured to allow a user to select time periods during which the ventilation unit 118 will operate or not operate. In some embodiments, the controller 110 can be configured to allow a user to select a speed the ventilation unit 118 will operate during each period selected. In some embodiments, the controller 110 can be configured to allow a user to specify when the ventilation unit 118 can operate at a reduced level to conserve energy while at the same time maintaining the indoor air quality within the building 100 at an acceptable level such as for example, in accordance with a user's vacation schedule.

The one or more HVAC components 104 can also provide humidification, dehumidification, or combinations thereof within the building 100. In some embodiments, humidification or dehumidification can be provided by a humidifier unit or a dehumidifier unit, as applicable, in a controlled manner according to a schedule or setpoint stored in the controller 110. In some embodiments, the controller 110 can be configured to allow a user to select certain time periods in which the humidification unit or dehumidification unit will operate or not operate. In some embodiments, the controller 110 can be configured to allow a user to select a setpoint the humidification unit or dehumidification unit will operate during each period. In some embodiments, the controller 110 can be configured to allow a user to specify when the humidification unit or dehumidification unit may operate at a reduced level to conserve energy while maintaining the indoor air quality within the building 100 at an acceptable level such as for example, in accordance with a user's vacation schedule.

The HVAC system 102 can include a communications gateway 124 that allows one or more of the one or more HVAC components 104 to communicate wirelessly with one another in accordance with a wireless communications protocol such as, for example, cellular communication, ZigBee, Bluetooth, Wi-Fi, IrDA, dedicated short range communication (DSRC), EnOcean, combinations thereof, or any other suitable wireless protocols, as desired. In some embodiments, the communications gateway 124 can facilitate communication between the one or more HVAC components 104 over a local area network (LAN), a wide area network (WAN), or the Internet.

In some embodiments, one or more air filters 126 can be used to remove dust and other pollutants from the air inside the building 100. In the illustrated embodiment, the one or more air filters 126 are installed in the return air duct 108 and can filter the air prior to the air entering the one or more HVAC components 104. It is to be appreciated that any other suitable location for the one or more air filters 126 can be used. The one or more air filters 126 can, in some embodiments, improve the indoor air quality and protect the one or more HVAC components 104 from dust and other particulate matter.

In some embodiments, the HVAC system 102 includes an equipment interface module (EIM) 128. In some embodiments, the EIM 128 can be configured to communicate with the controller 110 via, for example, a wired or wireless communication link 130. In some embodiments, the EIM 128 can be incorporated or combined with the controller 110. In some embodiments, the EIM 128 may communicate, relay, or otherwise transmit data regarding a selected parameter (e.g., temperature, pressure, flowrate, etc.) to the controller 110. In some embodiments, the controller 110 may use the data from the EIM 128 to evaluate the system's operation or performance.

In some embodiments, the EIM 128 can include one or more terminals that can be wired to various components in the building 100. For example, in some embodiments, the EIM 128 can be connected in electrical communication with an electronic device such as, but not limited to, a window or door sensor configured to indicate whether a door or window is opened or closed; the EIM 128 can be connected in electrical communication with a leak detector configured to indicate when a water leak is present; the EIM 128 can be connected in electrical communication with one or more air quality sensors such as, but not limited to, a carbon monoxide detector configured to indicate when an amount of carbon monoxide exceeds a threshold; combinations thereof, or the like. In some embodiments, the EIM 128 can provide information on a state of the connected electronic device to the controller 110. In some embodiments, a user or installer can customize an action taken by the controller 110 in response to the state information received from the EIM 128.

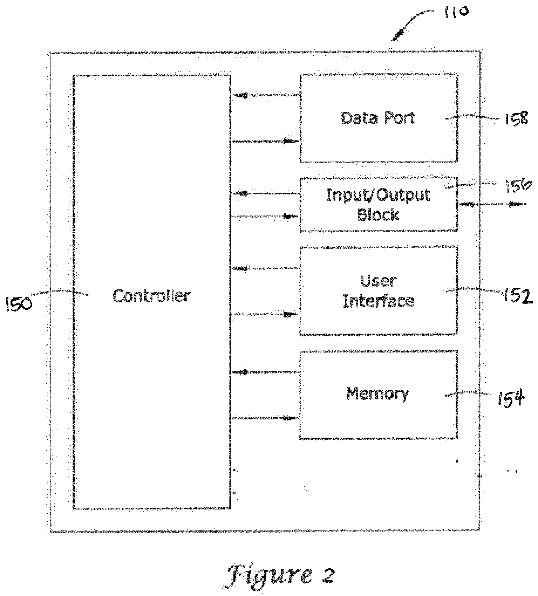

FIG. 2 is a schematic view of the controller 110, according to some embodiments. In some embodiments, the controller 110 can be a thermostat.

In the illustrated embodiment, the controller 110 includes a controller 150 (e.g., microprocessor, microcontroller, etc.), a user interface 152, and a memory 154. In some embodiments, the controller 110 can include an input/output block (I/O block) 156 for receiving one or more signals from the HVAC system 102, for providing one or more control signals to the HVAC system 102, or combinations thereof. For example, the I/O block 156 can communicate with one or more HVAC components 104 of the HVAC system 102. Additionally, in some embodiments, the I/O block 156 can communicate with another controller, which is in communication with one or more HVAC components 104 of the HVAC system 102, such as a zone control panel in a zoned HVAC system, EIM 128, combinations thereof, or any other suitable building control device.

The controller 150 can operate in accordance with an algorithm that controls or at least partially controls the one or more HVAC components 104 of the HVAC system 102. The controller 150 can, for example, operate in accordance with an algorithm that provides temperature setpoints, starting times, ending times, combinations thereof, or the like. In some embodiments, the controller 150 can be configured to read a temperature sensed by the temperature sensor and control the one or more HVAC components 104 of the HVAC system 102 to maintain a desired temperature setpoint within the building 100 in accordance with a programmable schedule stored in the memory 154 of the controller 110. In some embodiments, the controller 150 can be configured to control the one or more HVAC components 104 including one or more indoor air quality units such as, for example a ventilation unit, a humidification unit, and/or a dehumidification unit, to maintain a desired indoor air quality within the building 100, sometimes in accordance with a programmable schedule stored in the memory 154 of the controller 110.

In some embodiments, the controller 110 can be programmed to control the one or more indoor air quality units according to a programmable operating schedule that includes one or more time periods. The programmable operating schedule in some embodiments the same period as the programmable operating schedule of the temperature setpoints (heating setpoints, cooling setpoints), or they may be different time periods. In some embodiments, the controller 150 can be programmed to allow a user to select at least a first period of the programmable operating schedule to control at least one of the one or more indoor air quality units (e.g., ventilation unit, humidifier unit, dehumidifier unit) differently than during at least one other of period of the programmable operating schedule. For example, the controller 150 can be programmed to allow a user to select a period in which an indoor quality unit will operate and a different period in which the indoor air quality unit will not operate (or will operate in a different mode, at a different speed, at a different setpoint, or at some other different setting). In some embodiments, the controller 150 can be programmed to allow a user to select which indoor air quality units will or will not operate during each period of the programmable operating schedule or during a user's vacation schedule. In some embodiments, the controller 150 can be programmed to allow a user to select which indoor air quality units may operate at a reduced level to conserve energy while at the same time maintaining indoor air quality for a period identified by the user such as, for example, the user's vacation schedule.

In some embodiments, user interface 152 can be any suitable user interface that permits controller 110 to display information as well as accept one or more user interactions with the controller 110. For example, the user interface 152 can permit a user to enter data such as temperature set points, humidity set points, starting times, ending times, diagnostic limits, conditions under which diagnostic limits may be suspended, responses to alerts, requests for ventilation, and/or the like. In some embodiments, the user interface 152 can be configured to enable a user to customize an output action taken based on a particular input.

In some embodiments, user interface 152 can include a display and a separate keypad. In some embodiments, a display can include any suitable display. In some embodiments, a display can be a liquid crystal display (LCD), and a fixed segment display, a dot matrix LCD display, combinations thereof, or the like. In some embodiments, user interface 152 can be a touch screen LCD panel that functions as both display and keypad. In some embodiments, a touch screen LCD panel may be adapted to solicit values for several operating parameters and to receive such values.

The memory 154 can be in communication with the controller 150. The memory 154 can be used to store any desired information, such as the control algorithm, setpoints, schedule times, combinations thereof, or the like. Memory 154 can be any suitable type of storage device including, but not limited to, RAM, ROM, EPROM, flash memory, a hard drive, combinations thereof, or the like. In some embodiments, controller 150 can store information within memory 154 and retrieve the stored information.

In some embodiments, controller 110 includes a data port 158. Data port 158 can be a wireless port such as a Bluetooth^{™} port or any other wireless protocol. In some embodiments, data port 158 can be a wired port such as a serial port, a parallel port, a CATS port, a USB (universal serial bus) port, combinations thereof, or the like. In some embodiments, data port 158 can be a USB port and may be used to download and/or upload information from a USB flash drive or some other data source. Other remote devices may also be employed.

Data port 158 can be configured to communicate with controller 150 and can, if desired, be used to upload information to controller 150 or download information from controller 150.

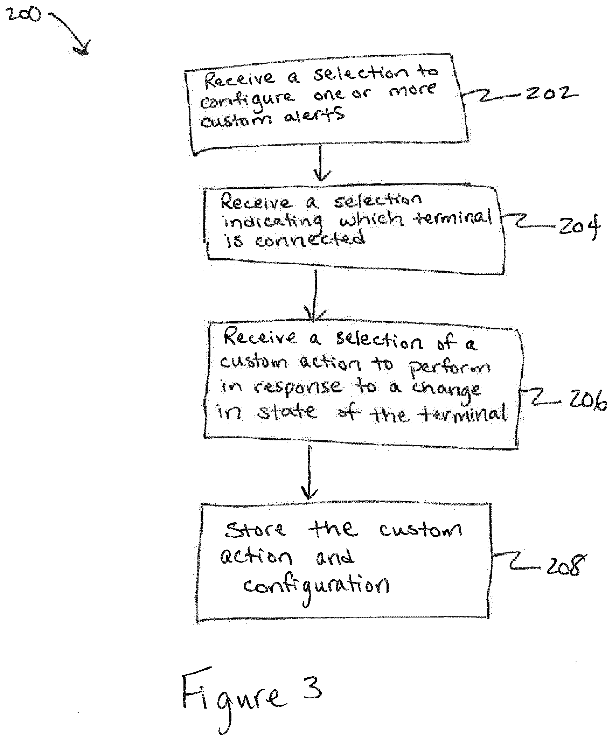

FIG. 3 shows a flowchart of a method 200, according to some embodiments. The method 200 can be used to, for example, customize one or more output actions to be taken by a controller (e.g., the controller 110 of FIG. 1) in response to a particular input.

At block 202, the method 200 includes receiving, by the controller, a selection to configure one or more custom alerts. In some embodiments, the controller can enable a user to name the custom alert.

At block 204, the method 200 includes receiving, by the controller, a selection indicating which terminal is connected to an electronic device. In some embodiments, the terminal can be a terminal present on an equipment module interface (EIM) such as EIM 128 (FIG. 1). in some embodiments, selecting which terminal is connected to the electronic device can also include indicating whether the electronic device connected to the terminal is in a normally on or normally off state.

At block 206, the method 200 includes receiving, by the controller, a selection of a custom action to perform in response to a change in state of the terminal. In some embodiments, the custom actions can include, but are not limited to, locking out heating or cooling; activating a fan; activating a custom terminal; locking out a humidifier; locking out a dehumidifier; turning on a ventilator; locking out a ventilator; combinations thereof, or the like. In some embodiments, there may be one or more additional settings associated with the custom action. For example, a time delay prior to the action; a time duration of the action; a maximum or minimum acceptable temperature in the conditioned space; combinations thereof, or the like. In some embodiments, block 206 can include entering a name for the custom action; entering an alert message for displaying when the action is enabled; combinations thereof; or the like.

At block 208, the method 200 includes storing, by the controller, the custom action and configuration in a memory of the controller.

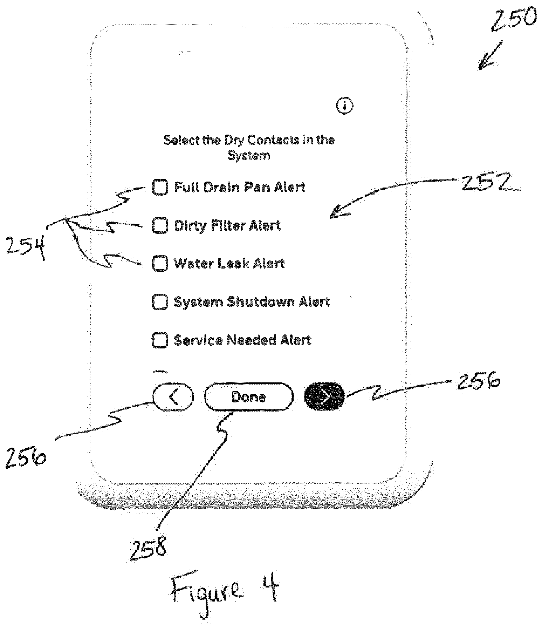

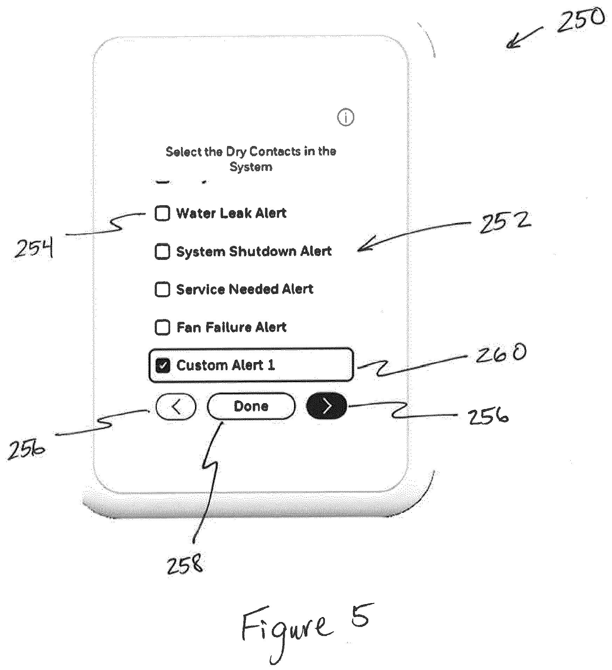

FIG. 4 to FIG. 21 show user interfaces that may be displayed on the controller 110, according to some embodiments. The various user interfaces shown in FIG. 4 to FIG. 21 enable a user to create one or more custom actions based on a particular input and the corresponding desired output. In some embodiments, enabling the user or installer to create such custom actions can allow a user to accomplish the user's goals without the controller including all options for the user. For example, the controller does not need to have a user interface specifically programmed to enable the user to lockout the heating or cooling in response to a window or door being left open, but the user can still accomplish this integration.

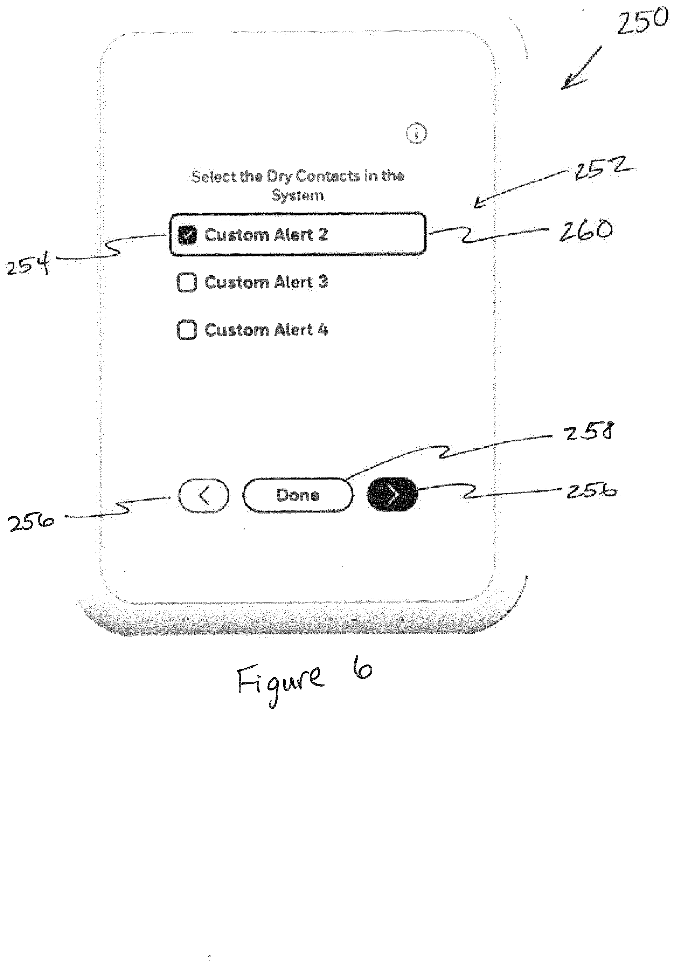

FIG. 4, FIG. 5, and FIG. 6 show a user interface 250, according to some embodiments. The user interface 250 enables a user to browse through and select preprogrammed customizations or custom configuration for the corresponding HVAC system (e.g., HVAC system 102). The user interface 250 includes a series of options 252, each of which includes a selection box 254 that can be selected by the user to configure the respective option. The user interface 250 can include scrolling options 256 and a done button 258 once the user has selected the desired option. As shown in FIG. and FIG. 6, the options 252 include custom alert options 260. In the illustrated embodiment, the custom alert options 260 include four options. It is to be appreciated that the number of custom alert options 260 can vary beyond four. In some embodiments, the number of custom alert options 260 may be based on, for example, several terminals in the EIM 128 that can be connected to electronic devices.

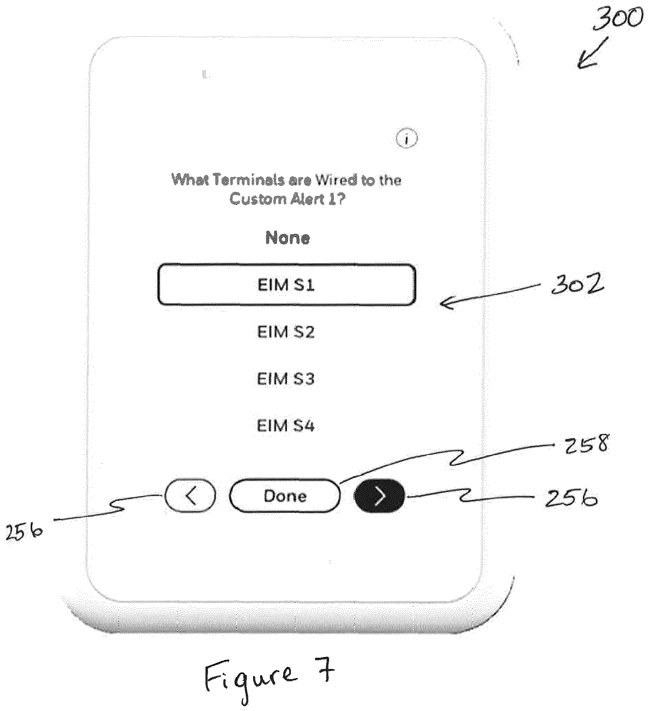

Referring to FIG. 7, in some embodiments, when the user selects to configure a custom alert, a user interface 300 can be displayed, according to some embodiments. As illustrated, the user interface 300 enables a user to select which terminal from a list of terminals 302 is being configured for the custom alert selected by the user. In some embodiments, the list of terminals 302 includes terminals able to receive additional connections. In the illustrated embodiment, the list of terminals 302 includes four terminals. It is to be appreciated that the actual number of terminals can vary beyond four. In some embodiments, the list of terminals 302 can include only those terminals which include a connected electronic device. For example, if a fifth terminal "EIM S5" is not connected to anything, the list of terminals 302 would not include EIM S5.

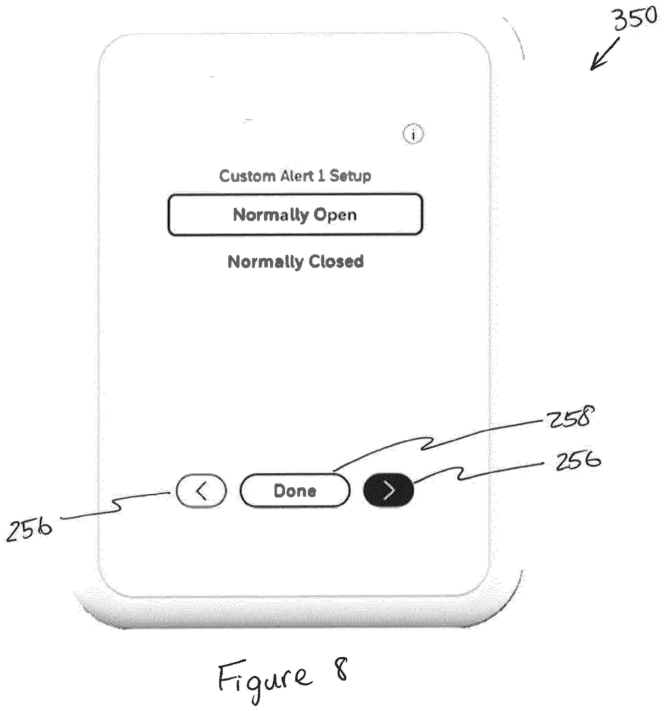

FIG. 8 shows a user interface 350, according to some embodiments. In the user interface 350, the user can select a default state of the connected electronic device. For example, the states can include "Normally Open" or "Normally Closed." In this manner, the controller 110 can monitor for a change in state to initiate the custom alert. It is to be appreciated that the text is an example and can vary beyond that shown.

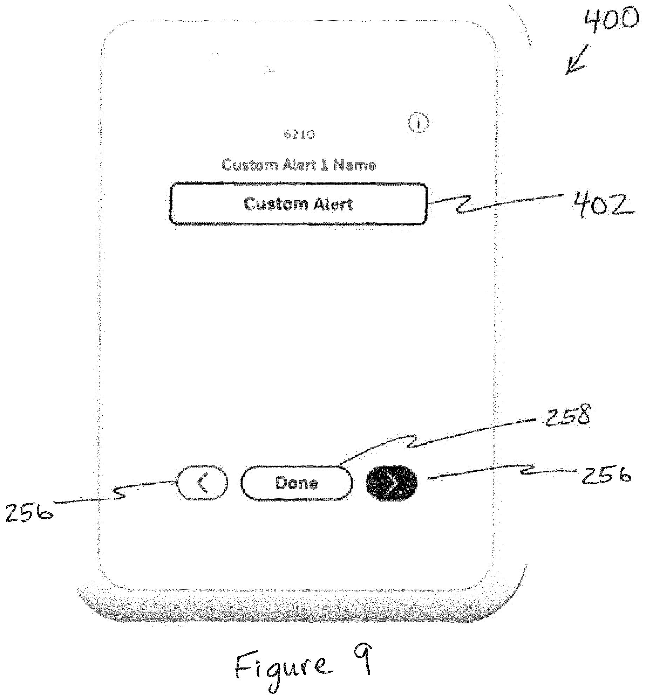

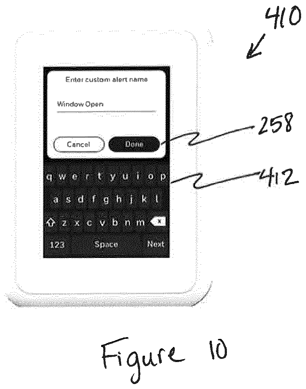

FIG. 9 shows a user interface 400, according to some embodiments. In the user interface 400, a text box 402 is shown displaying a name for the custom alert. The user can select the text box 402 to display a user interface 410 (FIG. 10) in which the user can type a custom alert name using keyboard 412.

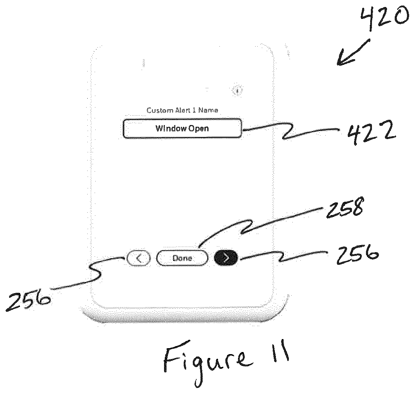

FIG. 11 shows a user interface 420, according to some embodiments. The user interface 420 includes a text box 422 showing the custom alert name as edited by the user. It is to be appreciated that the user interface 420 and the user interface 400 (FIG. 9) are the same user interface, except that the text shown in the text box 422 is updated to reflect the entry by the user via the user interface 410 (FIG. 10).

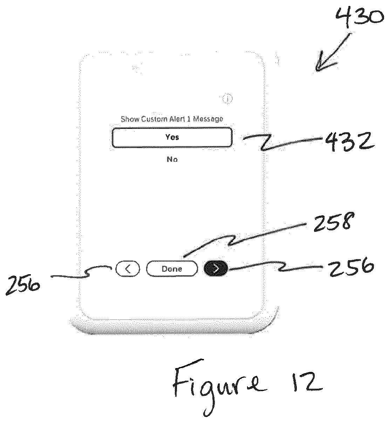

FIG. 12 shows a user interface 430, according to some embodiments. The user interface 430 includes an option 432 to select whether a custom alert message is displayed to the user in response to the custom alert being triggered. In some embodiments, the user can select to not show a custom alert. In such embodiments, no alert message is shown to the user on the controller 110 when the alert is triggered. In some embodiments, even when the user selects to not show a custom alert, the controller can show a message on the controller 110 that the custom alert (and corresponding name) has been triggered.

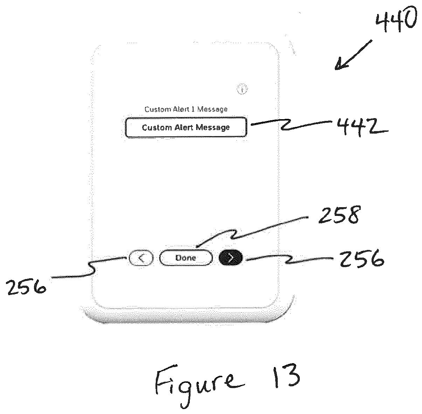

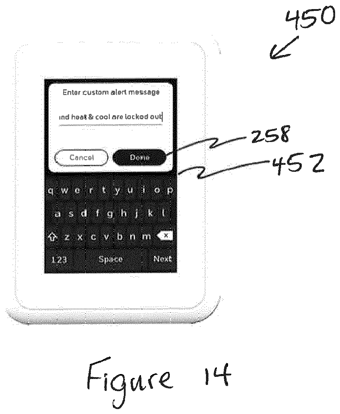

FIG. 13 shows a user interface 440, according to some embodiments. The user interface 440 includes a text box 442 showing a current name for the custom alert. Like the actions of customizing the alert name, when the user selects the text box 442, the user can be presented with the user interface 450 (FIG. 14) in which the user can type a custom alert message using keyboard 452.

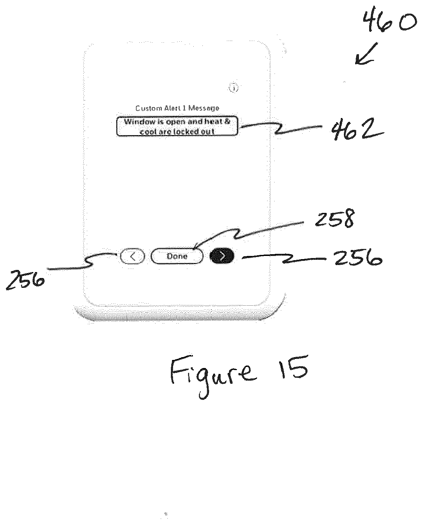

FIG. 15 shows a user interface 460, according to some embodiments. The user interface 460 can include a text box 462 showing the custom alert message as edited by the user. It is to be appreciated that the user interface 440 (FIG. 13) and the user interface 460 are the same user interface, except that the text shown in the text box 462 is updated to reflect the entry by the user via the user interface 450.

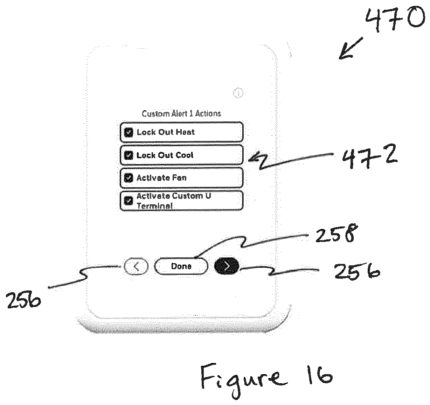

FIG. 16 shows a user interface 470, according to some embodiments. The user interface 470 can include a list of actions 472 that are selectable by the user to indicate what custom action should be taken for the corresponding custom alert. In some embodiments, the list of actions 472 can be fixed and can include locking out heat, locking out cooling, activating a fan, or activating a custom terminal (e.g., a custom U terminal). In some embodiments, there can be one or more additional actions. In some embodiments, there can be fewer options. For example, in some embodiments, there can be one or more options relating to controlling humidity in the conditioned space or the like. It is to be appreciated that the user can select more than one option via the list of actions 472.

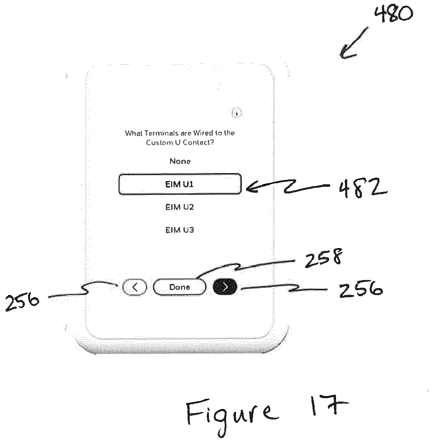

If a user selects to activate a custom terminal as the custom action, then a user interface 480 (FIG. 17) can be displayed. The user interface 480 can include a list of custom terminals from a list of custom terminals 482. In some embodiments, the list of custom terminals 482 includes terminals able to receive additional connections. In the illustrated embodiment, the list of custom terminals 482 includes three custom terminals. It is to be appreciated that the actual number of terminals can vary beyond three. In some embodiments, the list of custom terminals 482 can include only those terminals which include a connected electronic device. In some embodiments, the list of custom terminals 482 can include all custom terminals which can receive a connection, not just those with connections already in place.

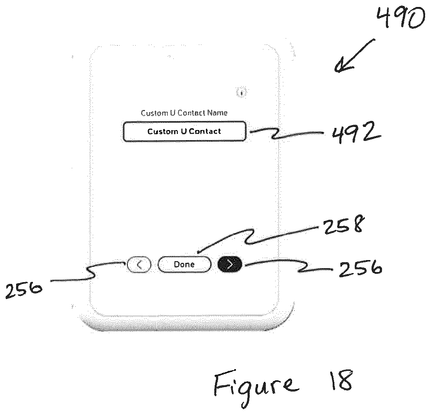

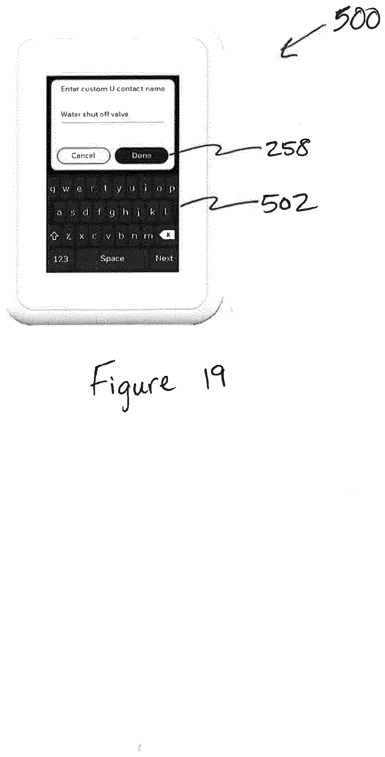

FIG. 18 shows a user interface 490, according to some embodiments. The user interface 490 displays a text box 492 showing a name of the custom contact. If the user selects the text box 492, a user interface 500 (FIG. 19) can be displayed which allows a user to type via a keyboard 502 and provide custom text corresponding to the custom terminal.

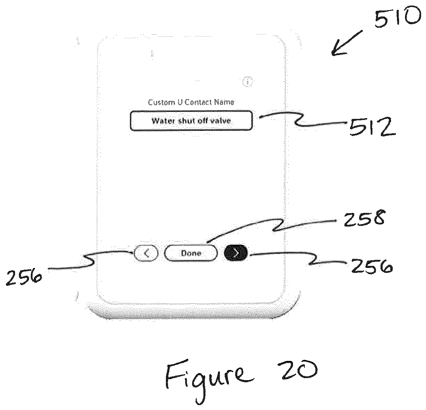

FIG. 20 shows a user interface 510, according to some embodiments. The user interface 510 can include a text box 512 showing the custom terminal as edited by the user. It is to be appreciated that the user interface 490 (FIG. 18) and the user interface 510 are the same user interface, except that the text shown in the text box 512 is updated to reflect the entry by the user via the user interface 500.

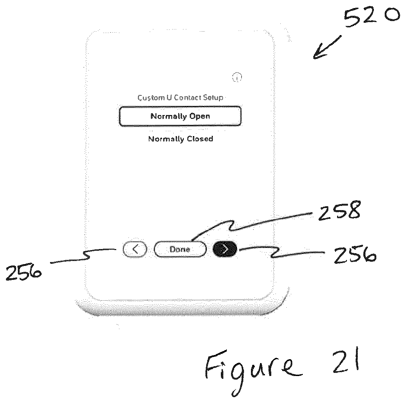

FIG. 21 shows a user interface 520, according to some embodiments. In the user interface 520, the user can select a default state of the electronic device connected to the custom terminal. For example, the states can include "Normally Open" or "Normally Closed." In this manner, the controller 110 can change a state to initiate a particular action based on the custom alert. It is to be appreciated that the text is an example and can vary beyond that shown. For example, in the example in which a water shut off valve is normally opened. If the custom action is triggered, the controller 110 can change the state of the water shut off valve to be closed.

In some embodiments, there can be one or more additional aspects that the user configures. For example, the user can set a time duration for the change in state of the custom terminal. In some embodiments, the user can set delay times before instituting the custom action. In some embodiments, the user can set one or more temperature limits for the system, after which the custom action can be overridden due to being outside the one or more temperature limits.

The terminology used herein is intended to describe embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A control system for a building, comprising:
a controller configured to control a heating, ventilation, and air conditioning (HVAC) system configured to condition a space within the building; and
an electronic device configured to be in electronic communication with the controller;
wherein the electronic device provides a first output to the controller;
wherein the first output corresponds to a first state of the electronic device;
wherein the electronic device provides a second output to the controller;
wherein the second output corresponds to a second state of the electronic device;
wherein in response to receiving one of the first output or the second output, the controller is configured to change a state of the HVAC system from a first state to a second state;
wherein the first state of the HVAC system is different than the second state of the HVAC system;
wherein in response to receiving the other of the first output or the second output, the controller is configured to change the state of the HVAC system from the second state to a third state;
wherein the third state of the HVAC system is different than the second state of the HVAC system.

2. A method, comprising:
receiving, at a controller of a building, a selection to configure one or more custom alerts;
receiving, at the controller of the building, a selection indicating which terminal is connected to an electronic device;
receiving, at the controller of the building, a selection of a custom action to perform in response to a change in state of the terminal; and
storing the custom action and configuration in a memory of the controller of the building.

3. A method, comprising:
monitoring, by a building controller, one or more terminals for a change in state; and
in response to the change in state, changing a state of one or more building systems.
